# EUROPÄISCHE PATENTSCHRIFT

(11) **EP 2 616 321 B1**
(45) Veröffentlichungstag und Bekanntmachung des Hinweises auf die Patenterteilung: **27.08.2014**
(21) Anmeldenummer: 11749424.5
(22) Anmeldetag: 31.08.2011
(51) Int. Cl.: B63H 9/02

(54) **MAGNUS-ROTOR**
MAGNUS ROTOR
ROTOR À EFFET MAGNUS

(30) Priorität: 16.09.2010 DE 102010040917
(43) Veröffentlichungstag der Anmeldung: 24.07.2013
(73) Patentinhaber: Wobben Properties GmbH, 26605 Aurich (DE)
(72) Erfinder: ROHDEN, Rolf, Aurich 26607 (DE)
(74) Vertreter: Eisenführ Speiser
(86) Internationale Anmeldenummer: PCT/EP2011/064996
(87) Internationale Veröffentlichungsnummer: WO 2012/034861

(56) Entgegenhaltungen:
- EP-A1- 0 055 638
- DE-A1-102006 025 732
- US-A- 4 630 997
- US-A1- 2009 217 851

## Beschreibung

Die vorliegende Erfindung betrifft einen Magnus-Rotor.

Magnus-Rotoren werden auch als Flettner-Rotoren oder Segel-Rotoren bezeichnet.

Magnus-Rotoren sind im Stand der Technik bekannt. Insbesondere als Schiffsantriebe sind sie auch unter dem Begriff Flettner-Rotor bekannt geworden und in dem Buch "Die Segelmaschine" von Klaus D. Wagner, Ernst Kabel Verlag GmbH, Hamburg, 1991, ist die Ausrüstung von Schiffen mit einem solchen Flettner-Rotor oder Magnus-Rotor beschrieben.

Da derartige Schiffsantriebe unter dem Zusammenwirken ihrer eigenen Rotation und des sie umströmenden Windes eine Vorschubkraft des Schiffes erzeugen, können Magnus-Rotoren als Schiffsantriebe grundsätzlich überall dort eingesetzt werden, wo ausreichende Winde herrschen. Dies ist grundsätzlich auf allen Meeren rund um den Globus, d.h. in allen Klimazonen der Erde der Fall.

Dabei weisen die Meere und Klimazonen der Erde jedoch sehr unterschiedlich klimatische Bedingungen und Witterungsbedingungen auf, die aufgrund der Jahreszeiten auch an demselben Ort der Erde stark schwanken können. Diese klimatischen Bedingungen können zu einer Einschränkung der Nutzung eines Magnus-Rotors führen.

Als allgemeiner Stand der Technik wird auf die DE 10 2006 025 732 A1 verwiesen.

Der Erfindung liegt daher die Aufgabe zugrunde, einen Magnus-Rotor vorzusehen, der möglichst unabhängig von klimatischen Bedingungen eingesetzt werden kann. Erfindungsgemäß wird diese Aufgabe durch einen Magnus-Rotor mit den Merkmalen nach Anspruch 1 sowie durch ein Schiff, insbesondere ein Frachtschiff, nach Anspruch 12 gelöst. Vorteilhafte Weiterbildungen sind in den Unteransprüchen beschrieben.

Somit wird ein Magnus-Rotor vorgesehen mit einem Träger, welcher im Inneren des Magnus-Rotors angeordnet ist, einem Rotor, welcher im Betrieb des Magnus-Rotors um den Träger rotiert, einer Lagerung, welche den Rotor auf dem Träger trägt, und einer Heizvorrichtung, die im Inneren des Trägers zur Erzeugung von erhitzter Luft vorgesehen ist. Der Träger weist wenigstens eine Öffnung an seiner Außenseite auf, die den Innenraum des Trägers mit dem Zwischenraum zwischen Träger und Rotor derart verbindet, dass Luft zwischen diesen beiden Räumen hindurch treten kann.

Es ist vorteilhaft, eine Heizvorrichtung im Inneren des Trägers vorzusehen, diese Luft erhitzen zu lassen und der erhitzten Luft durch wenigstens eine Öffnung das Aufsteigen in den Bereich außerhalb und oberhalb des Trägers zu dem Rotor zu gestatten, da durch diese erhitzte Luft der Rotor von innen erwärmt und dadurch das Eis, welches an seiner Außenwand anhaftet, abgetaut werden kann. Durch dieses Abtauen kann ein vereister Magnus-Rotor wieder betriebsfähig gemacht werden, da ein Magnus-Rotor, an dessen Rotor von außen Eis anhaftet, nicht betrieben werden sollte. So kann das anhaftende Eis eine erhebliche zusätzliche Masse darstellen, die zusätzlich angetrieben werden müsste und die Effizienz des Magnus-Rotorantriebs verschlechtert. Ferner kann das Eis unsymmetrisch an der Außenwand anhaften und hierdurch eine Unwucht erzeugen, die den Betrieb beeinträchtigen oder unmöglich machen kann. Auch besteht die Gefahr, dass beim Betrieb anhaftendes Eis von der Außenwand des Magnus-Rotors gelöst und von diesem weg geschleudert wird, wodurch die Umgebung durch die weggeschleuderten Eisteile gefährdet werden kann. Daher ist es erforderlich, aus Sicherheitsgründen und zur Wiederherstellung des Magnus-Rotor-Betriebs eine Möglichkeit vorzusehen, einen vereisten Magnus-Rotor schnellstmöglich abtauen zu können.

Gemäß einem Aspekt der Erfindung wird vorgesehen, dass die Heizvorrichtung über wenigstens eine Luftführung derart mit den Trägeröffnungen verbunden ist, dass die durch die Heizvorrichtung erhitze Luft in den Zwischenraum zwischen Träger und Rotor abgegeben werden kann. Hierdurch wird erreicht, dass die erhitze Luft möglichst vollständig in diesen Zwischenraum abgegeben wird und nicht nur teilweise, was der Fall ist, falls die erhitzte Luft von der Heizvorrichtung in den Innenraum des Trägers abgegeben werden würde und von diesem lediglich teilweise in diesen Zwischenraum aufsteigen würde. Hierdurch kann eine höhere Effizienz der Wärmenutzung der erhitzten Luft zur Erwärmung und Abtauung des Rotors erreicht werden. Ferner kann eine zusätzliche Erwärmung des Innenraums des Trägers unerwünscht sein, so dass es auch diesbezüglich vorteilhaft ist, die erhitzte Luft möglichst vollständig in den Zwischenraum zwischen Träger und Rotor abzugeben.

Gemäß einem weiteren Aspekt der Erfindung wird der Rotor über ein Verbindungselement auf der Lagerung getragen. Das Verbindungselement weist wenigstens eine Öffnung auf, die den Zwischenraum zwischen Träger und Rotor mit dem Raum oberhalb des Verbindungselements derart verbindet, dass Luft zwischen diesen beiden Räumen hindurchtreten kann. Durch diese Öffnung in dem tragenden Element, welches die Außenwand des Rotors mit der Lagerung und dem Antrieb auf der Mittelachse des Magnus-Rotors verbindet, wird ein Luftaustausch nach oben in den Innenraum des Rotors ermöglicht, um den Magnus-Rotor möglichst vollständig bis zu seinem oberen Ende zu erwärmen und abzutauen.

Gemäß einem Aspekt der Erfindung weist die Heizvorrichtung eine Vielzahl von Luftführungen und bzw. oder der Träger eine Vielzahl von Öffnungen und bzw. oder das Verbindungselement eine Vielzahl von Öffnungen auf. Hierdurch wird einerseits der Luftaustausch nach oben in den Rotor vergrößert, wodurch gleichzeitig eine höhere bzw. schnellere Erwärmung und Abtauung der Außenwand des Rotors erreicht wird. Andererseits wird durch eine Vielzahl von Öffnungen der Luftstrom gleichmäßiger innerhalb des Rotors verteilt, so dass auch eine gleichmäßigere und damit schnellere Erwärmung und Abtauung erreicht wird.

Gemäß einem weiteren Aspekt der Erfindung ist das Verbindungselement derart ausgebildet, dass die Öffnungen des Verbindungselements in der horizontalen Ebene mehr Fläche einnehmen als das Verbindungselement selbst. Durch derart große Öffnungen wird der Raum unterhalb und oberhalb des Verbindungselements so miteinander verbunden, dass ein möglichst großer einheitlicher Raum entsteht, in dem sich die erhitzte Luft ohne störende oder kanalisierende Trennungen schnell und gleichmäßig verteilen kann.

Gemäß einem Aspekt der Erfindung sind die Vielzahl von Luftführungen der Heizvorrichtung und bzw. oder die Vielzahl von Öffnungen des Trägers und bzw. oder die Vielzahl von Öffnungen des Verbindungselements im Wesentlichen gleichmäßig über den Umfang des Trägers und bzw. oder des Verbindungselements verteilt vorgesehen. Hierdurch wird eine möglichst gleichmäßige Verteilung der aufsteigenden erhitzten Luft erreicht, da über den Umfang des Trägers bzw. Verbindungselements gleichermaßen viele und gleichverteilte Öffnungen vorgesehen sind, durch die die erhitzte Luft in den Innenraum des Rotors aufsteigen kann.

Gemäß einem weiteren Aspekt der Erfindung sind die Vielzahl von Luftführungen der Heizvorrichtung und bzw. oder die Vielzahl von Öffnungen des Trägers und bzw. oder die Vielzahl von Öffnungen des Verbindungselements auf dem Umfang des Trägers und bzw. oder des Verbindungselements in radialer Richtung möglichst weit von der Mittelachse des Magnus-Rotors beabstandet vorgesehen. Hierdurch kann die erhitzte Luft direkt an der Innenseite der Außenwand des Rotors aufsteigen und so möglichst schnell und vollständig ihre Wärmeenergie an diese abgeben.

Gemäß einem Aspekt der Erfindung sind die Vielzahl von Luftführungen der Heizvorrichtung und bzw. oder die Vielzahl von Öffnungen des Trägers und bzw. oder die Vielzahl von Öffnungen des Verbindungselements derart ausgebildet, dass ihre Fläche in Umfangsrichtung größer ausgebildet ist als in radialer Richtung. Durch diese Geometrie werden die Öffnungen als Schlitze oder dergleichen derart ausgebildet, dass sie einen möglichst großen Luftstrom der erhitzten Luft bei Aufsteigen der erhitzten Luft in direkten Kontakt mit der Innenseite der Außenwand des Rotors bringen. Hierdurch wird die Wärmeabgabe an die Außenwand des Rotors begünstigt.

Gemäß einem weiteren Aspekt der Erfindung ist der Rotor aus Aluminium ausgebildet. Da Aluminium eine vergleichsweise, z.B. gegenüber Stahl, gute thermische Leitfähigkeit besitzt, kann die Wärmeenergie aus der erhitzten Luft vergleichsweise gut und schnell aufgenommen werden. Hierdurch wird ein schnelles Abtauen des Rotors begünstigt.

Gemäß einem Aspekt der Erfindung ist der Träger aus Stahl ausgebildet. Stahl weist z.B. gegenüber Aluminium eine vergleichsweise schlechte thermische Leitfähigkeit auf. Daher wird durch den aus Stahl ausgebildeten Träger weniger thermische Energie aus der erhitzten Luft aufgenommen als dies der Rotor tut. Auf diese Weise wird die Wärme der erhitzten Luft möglichst gut zum Abtauen des Rotors genutzt.

Gemäß einem weiteren Aspekt der Erfindung ist im Inneren des Trägers ein Elektromotor vorgesehen. Die Heizvorrichtung wird über elektrische Leitungen mit der elektrischen Energie gespeist, über die im Betrieb des Magnus-Rotors der Elektromotor gespeist wird. Durch diese Anordnung der Leistungszuführung, alternativ entweder zu dem Elektromotor oder der Heizvorrichtung, wird ausgenutzt, dass diese beiden Geräte nicht gleichzeitig betrieben werden, da das Abtauen des Rotors eben dann durchgeführt wird, wenn dieser aufgrund von Vereisung nicht mittels des Elektromotors angetrieben werden kann. Somit kann der Installationsaufwand der elektrischen Versorgung dieser beiden Geräte reduziert werden, da diese elektrische Versorgung weitestgehend über die gleichen Leitungen erfolgen kann.

Ausführungsbeispiele und Vorteile der Erfindung werden nachstehend unter Bezugnahme auf folgende Figuren näher erläutert:
- Fig. 1: zeigt eine perspektivische Ansicht eines Schiffes mit mehreren Magnus-Rotoren;
- Fig. 2: zeigt eine schematische Darstellung einer perspektivischen Darstellung eines Magnus-Rotors;
- Fig. 3: zeigt eine detaillierte Darstellung einer schematischen Seitenansicht des Magnus-Rotors;
- Fig. 4: zeigt eine schematische Darstellung einer vereinfachten Seitenansicht des Magnus-Rotors mit einer Heizvorrichtung in einer ersten Ausführungsform;
- Fig. 5: zeigt eine schematische Darstellung einer vereinfachten Seitenansicht des Magnus-Rotors mit einer Heizvorrichtung in einer zweiten Ausführungsform;
- Fig. 6: zeigt eine schematische Darstellung einer Draufsicht auf die Nabe eines Magnus-Rotors in der ersten und zweiten Ausführungsform;
- Fig. 7: zeigt eine schematische Darstellung einer Draufsicht auf den Träger eines Magnus-Rotors in der ersten Ausführungsform;
- Fig. 8: zeigt eine schematische Darstellung einer vereinfachten Seitenansicht des Magnus-Rotors mit einer Heizvorrichtung in der zweiten Ausführungsform; und
- Fig. 9: zeigt eine schematische Querschnittsansicht durch einen Magnus-Rotor.

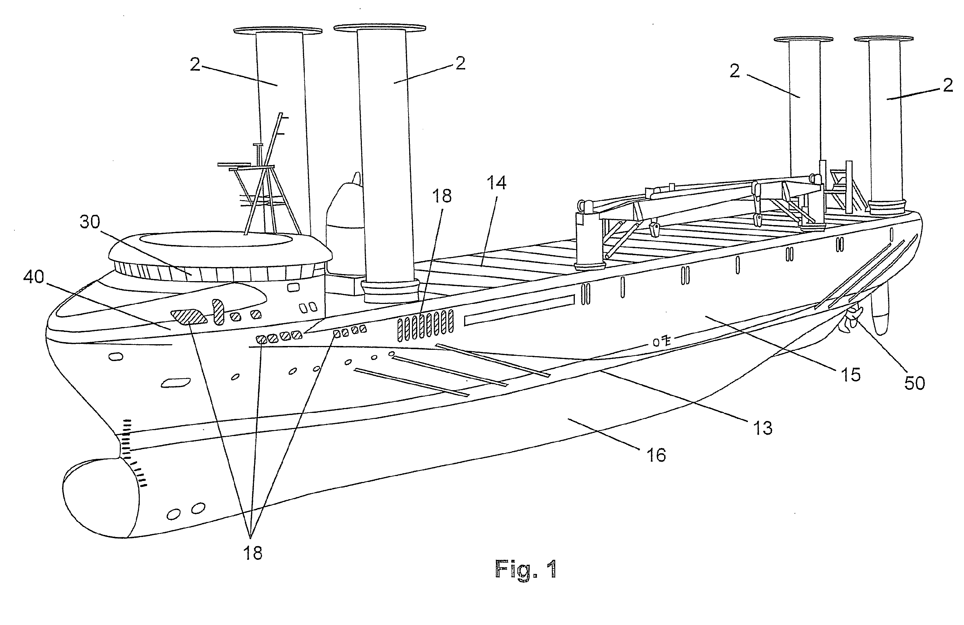

**Fig. 1** zeigt eine schematische Darstellung eines Schiffes mit mehreren Magnus-Rotoren 2. Das Schiff weist dabei einen Rumpf, bestehend aus einem Unterwasserbereich 16 und einem Überwasserbereich 15 auf. Ferner weist das Schiff vier Magnus-Rotoren 2 bzw. Flettner-Rotoren 2 auf, welche an den vier Ecken des Rumpfes angeordnet und vorzugsweise zylindrisch ausgebildet sind. Die vier Magnus-Rotoren 2 stellen hierbei windbetriebene Antriebe für das erfindungsgemäße Schiff dar. Das Schiff weist ein im Vorschiff angeordnetes Deckshaus 40 mit einer Brücke 30 auf. Das Schiff weist unter Wasser eine Schraube 50 bzw. einen Propeller 50 auf. Für eine verbesserte Manövrierfähigkeit kann das Schiff ebenfalls Querstrahlruder aufweisen, wobei vorzugsweise eines am Heck und eines bis zwei Querstrahlruder am Bug vorgesehen sind. Vorzugsweise sind diese Querstrahlruder elektrisch angetrieben. Die Unterkünfte, Kombüse, Provianträume, Messen usw. sind im Deckshaus 40 angeordnet. Hierbei weisen das Deckshaus 40, die Brücke 30 sowie alle Aufbauten oberhalb des Wetterdecks 14 eine aerodynamische Formgebung auf, um den Windwiderstand zu reduzieren. Dies wird insbesondere dadurch erreicht, dass scharfe Kanten und scharfkantige Anbauteile im Wesentlichen vermieden werden. Um den Windwiderstand zu minimieren und eine aerodynamische Formgebung zu erreichen, werden möglichst wenige Aufbauten vorgesehen.

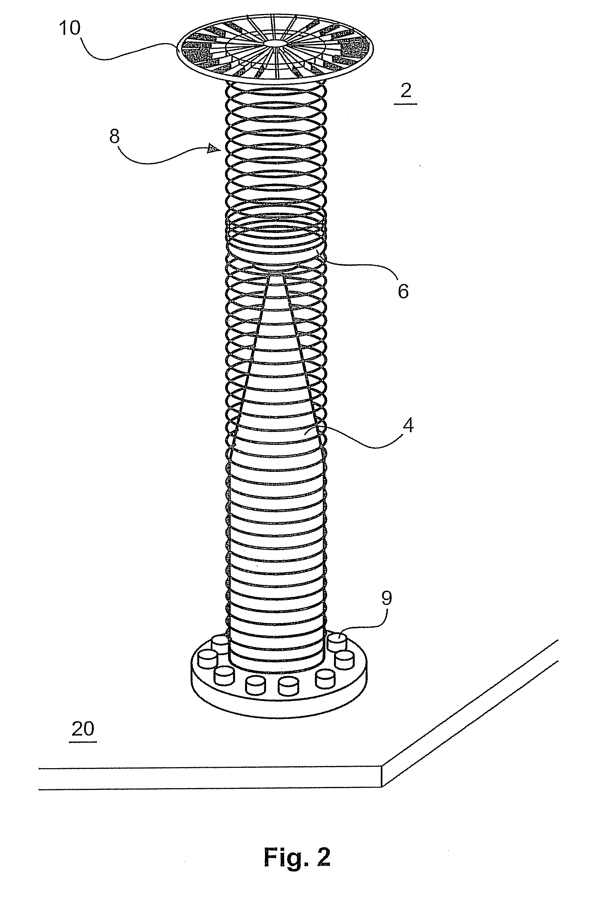

**Fig. 2** zeigt eine schematische Darstellung einer perspektivischen Darstellung eines Magnus-Rotors 2. Der Magnus-Rotor 2 weist einen oberen rotierenden Teil als Rotor 8 und einen unteren stehenden Teil als Träger 4 auf, die über eine Lagerung 6 miteinander verbunden sind. An dem oberen Ende des Rotors 8 ist eine Endplatte 10 an diesem angebracht. Der Träger 4 des Magnus-Rotors 2 ist über Bolzen oder Schrauben 9 auf einer Grundplatte 20 befestigt. Soweit der Magnus-Rotor 2 z.B. auf dem Deck eines Schiffes oder Ähnlichem angebracht ist, ist eine entsprechende Grundplatte 20 zur Befestigung des Trägers 4 nicht erforderlich, da diese von dem Schiffsdeck oder Ähnlichem selbst gebildet wird. Dabei ist der Träger 4 im Inneren des Magnus-Rotors 2 angeordnet. Auf diesem Träger 4 rotiert der obere Rotor 8 unter Vermittlung durch eine Lagerung 6. Diese Lagerung 6 kann ein bekanntes Wälzlager oder jede andere geeignete Ausführung eines Lagers sein.

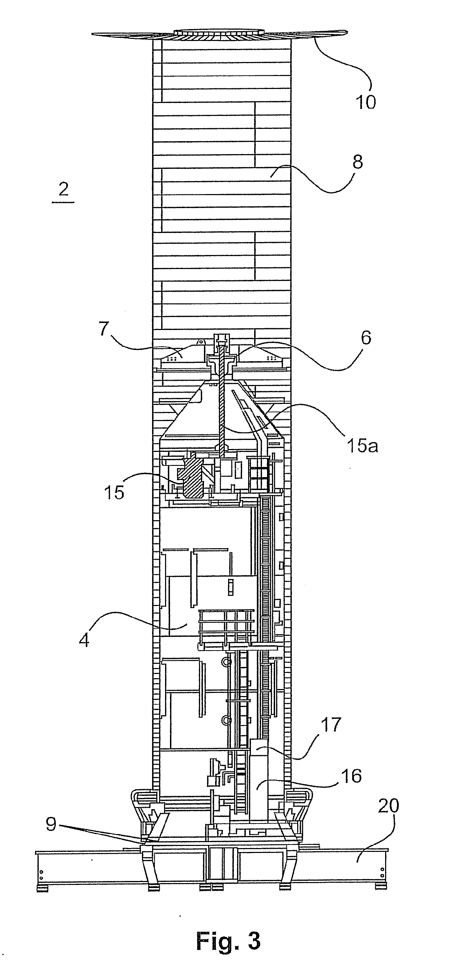

**Fig. 3** zeigt eine detaillierte Darstellung einer schematischen Seitenansicht des Magnus-Rotors 2. Im Inneren des Magnus-Rotors 2 sind ein Antrieb 15 zum Antreiben, d.h. zum Rotieren, des Rotors 8, sowie eine Steuerung 16 zum Steuern des Antriebs 15 und ein Wechselrichter 17 zum Speisen des Antriebs 15 vorgesehen. Diese sind im Inneren des Trägers 4 vorgesehen. Hierbei ist der Antrieb 15 des Rotors 8 im oberen Bereich des stehenden Trägers 4 angeordnet, so dass die Antriebswelle 15a des Antriebs 15 durch die Lagerung 6 hindurchgeführt wird. Der obere Rotor 8 ist über eine Nabe 7 mit der Antriebswelle 15a verbunden. Der Magnus-Rotor 2 ist mittels Bolzen oder Schrauben 9 auf der Grundplatte 20 oder einem Schiffsdeck oder dergleichen montiert. Der Magnus-Rotor 2 weist den innenliegenden Träger 4, die Lagerung 6, den oberen Rotor 8 sowie die Endplatte 10 auf, wie in **Fig. 2** gezeigt und beschrieben.

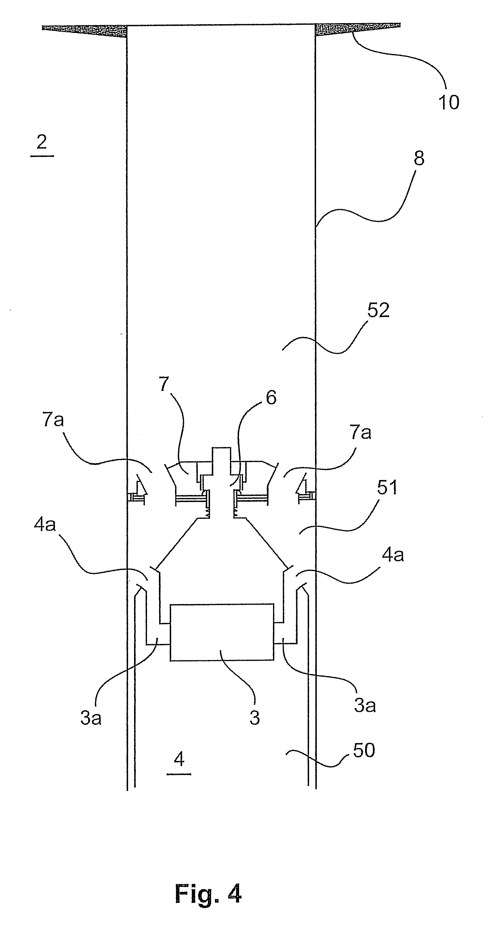

**Fig. 4** zeigt eine schematische Darstellung einer vereinfachten Seitenansicht des Magnus-Rotors 2 mit einer Heizvorrichtung 3 in einer ersten Ausführungsform. Dargestellt sind der Rotor 8 mit Endplatte 10 und Nabe 7 als die sich im Betrieb des Magnus-Rotors 2 bewegenden Teile. Diese werden über die ebenfalls rotierende Achsenwelle 15a (nicht dargestellt) auf der Lagerung 6 des Trägers 4 getragen.

Im Inneren des Trägers 4 ist als eine Heizvorrichtung 3 ein Heizlüfter 3 dargestellt, der im oberen Bereich des Trägers 4 vorgesehen ist. Der Heizlüfter 3 erzeugt heiße Luft, indem er Luft aus der Umgebung, d.h. aus dem Innenraum 50 des Trägers 4, ansaugt und diese z.B. an mittels elektrischen Stroms beheizten Wicklungen vorbeiführt. Dabei nimmt die angesaugte Luft Wärme von den stromdurchflossenen Wicklungen auf. Diese erhitzte Luft wird dann vom Heizlüfter 3 ausgeblasen. Dies erfolgt erfindungsgemäß über wenigstens ein Heizlüfterrohr 3a, welches mit der Ausblasöffnung des Heizlüfters 3 verbunden ist. Dieses Heizlüfterrohr 3a führt zu wenigstens einer Trägeröffnung 4a, welche in dem Träger 4 vorgesehen ist, um den Innenraum 50 des Trägers 4 mit dem Zwischenraum 51, 52 zwischen dem Träger 4 und dem Rotor 8 zu verbinden. Dabei weist diesen Zwischenraum 51, 52 einen Zwischenraum 51 auf, der im Wesentlichen durch das Volumen zwischen dem Träger 4, der Nabe 7 und dem Teil des Rotors 8 unterhalb der Nabe 7 gebildet wird, und einen Zwischenraum 52, der im Wesentlichen durch das Volumen zwischen der Nabe 7, dem Teil des Rotors 8 oberhalb der Nabe 7 und der Endplatte 10 gebildet wird. Über diese Trägeröffnung 4a wird somit die erhitzte Luft vom Heizlüfter 3 über das Heizlüfterrohr 3a aus dem Träger 4 in den Zwischenraum 51, 52 ausgeblasen.

Alternativ kann als die Heizvorrichtung 3 auch ein Wärmetauscher 3 oder dergleichen verwendet werden, der die thermische Energie zum Aufheizen der Luft aus einem weiteren Fluid diesem entzieht und die hieraus gewonnene thermische Energie zumindest teilweise an die Luft abgibt, die aus den Heizlüfterrohren 3a austritt. So kann z.B. aus den Abgasen eines Verbrennungsmotors des Schiffes, der dessen Schraube 50 bzw. Propeller 50 direkt antreibt oder elektrische Energie für einen Elektromotor zum Antreiben der Schraube 50 bzw. des Propellers 50 erzeugt, thermische Energie über einen Wärmetauscher 3 gewonnen und zumindest teilweise zur Erzeugung erhitzter Luft genutzt werden.

Da die erhitze Luft nach oben aufsteigt, wird die Außenwand des Rotors 8 ab im Wesentlichen der Höhe der Trägeröffnung 4a erwärmt und dadurch abgetaut, in der die Trägeröffnungen 4a vorgesehen sind. Allerdings wird der Luftstrom nach oben durch die Nabe 7 begrenzt, die die Außenwand des Rotors 8 mit der Achsenwelle 15a verbindet. Daher ist es erforderlich, in der Nabe 7 ebenfalls wenigstens eine Nabenöffnung 7a vorzusehen, damit die erhitze Luft weiter nach oben steigen kann, um den gesamten oberen Bereich des Rotors 8 zu erwärmen und abzutauen. In anderen Worten wird die erhitze Luft von den Trägeröffnungen 4a in den Zwischenraum 51 abgegeben. Da dieser Zwischenraum 51 jedoch durch die Nabe 7 vom Zwischenraum 52 getrennt ist, sind die Nabenöffnungen 7a erforderlich, um die beiden Zwischenräume 51 und 52 miteinander zu verbinden und einen Luftaustausch zwischen ihnen zu ermöglichen.

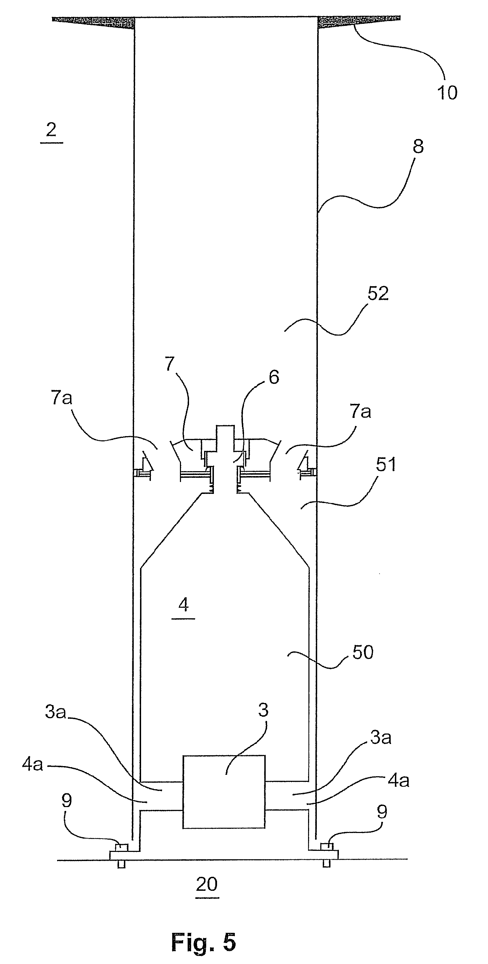

**Fig. 5** zeigt eine schematische Darstellung einer vereinfachten Seitenansicht des Magnus-Rotors 2 mit einer Heizvorrichtung 3 in einer zweiten Ausführungsform. Dargestellt sind im Wesentlichen die Elemente der **Fig. 4****.** Zusätzlich dargestellt sind die Grundplatte 20 oder das Schiffsdeck oder dergleichen, auf der bzw. dem der Magnus-Rotor 2 mittels Bolzen oder Schrauben 9 befestigt ist.

In dieser zweiten Ausführungsform ist die Heizvorrichtung 3 im unteren Bereich des Trägers 4 angeordnet und die Heizlüfterrohre 3a und Trägeröffnungen 4a sind radial ausgerichtet in dem Bereich des Magnus-Rotors 2 vorgesehen, in dem die Außenwand des Rotors 8 den Träger 4 umschließt. In dieser Ausführungsform wird somit die heiße Luft nahezu über die gesamte Höhe des Rotors 8 an dessen Außenwand vorbeigeführt. Hierdurch kann die Außenwand auch auf ihrer gesamten Höhe erwärmt und abgetaut werden. Jedoch wird in dieser Ausführungsform ein Teil der Wärme der heißen Luft bereits im unteren Bereich des Rotors 8 an dessen Außenwand abgegeben, so dass im oberen Bereich des Rotors 8 lediglich noch warme Luft, d.h. deutlich gegenüber dem Austritt aus den Heizlüfterrohren 3a abgekühlte Luft, ankommt. Entsprechend wird der obere Bereich des Rotors 8 weniger erwärmt als der untere Teil, so dass bei einer starken Vereisung im oberen Bereich des Rotors 8 diese unter ungünstigen Umständen nicht vollständig oder zumindest nur langsamer gegenüber der ersten Ausführungsform entfernt werden kann. Dafür weist die zweite Ausführungsform gegenüber der ersten Ausführungsform den Vorteil auf, dass hier die gesamte Höhe des Rotors 8 erwärmt und abgetaut werden kann, wohingegen bei der ersten Ausführungsform lediglich der Bereich ungefähr oberhalb der Trägeröffnungen 4a erwärmt und abgetaut wird, da die heiße Luft von diesen Trägeröffnungen 4a an nach oben steigt. Dafür fällt allerdings die Erwärmung dieses oberen Bereichs des Rotors 8 in der ersten Ausführungsform stärker aus als in der zweiten Ausführungsform.

In dem ersten und zweiten Ausführungsbeispiel sind in den **Fig. 4** **und** **5** zwei Heizlüfterrohre 3a, zwei Trägeröffnungen 4a sowie zwei Nabenöffnungen 7a dargestellt. Dabei kann jedoch auch nur ein Heizlüfterrohr 3a, eine Trägeröffnung 4a und eine Nabenöffnung 7a vorgesehen sein. Auch können mehr als zwei Heizlüfterrohre 3a, Trägeröffnungen 4a und Nabenöffnungen 7a vorgesehen sein. Auch können nur ein Heizlüfterrohr 3a und mehrere Trägeröffnungen 4a und bzw. oder Nabenöffnungen 7a vorgesehen sein. Dabei kommt es darauf an, möglichst viel erhitze Luft aus dem Träger 4 in dem gesamten oberen Bereich des Rotors 8 des Magnus-Rotors 2, d.h. den Zwischenraum 52, zu befördern und dort möglichst gleichmäßig an dessen Außenwand zu verteilen. Daher sind verschiedene Konfigurationen und Kombinationen von Heizlüfterrohren 3a, Trägeröffnungen 4a sowie Nabenöffnungen 7a möglich.

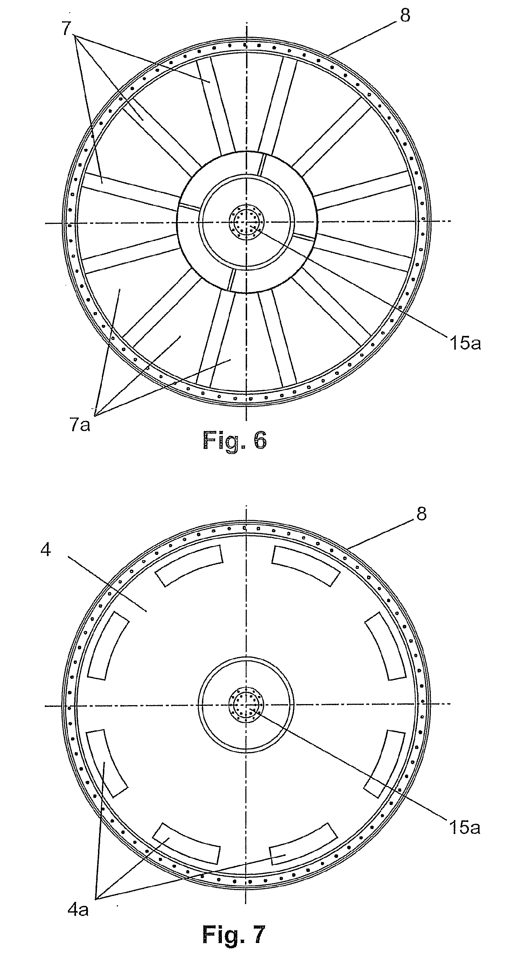

**Fig. 6** zeigt eine schematische Darstellung einer Draufsicht auf die Nabe 7 eines Magnus-Rotors 2 in der ersten und zweiten Ausführungsform. Die Nabe 7 ist in dieser Darstellung derart ausgestaltet, dass sie die Außenwand des Rotors 8 über Rippen mit der Achsenwelle 15a verbindet. Hierdurch können die Öffnungen 7a besonders groß ausgebildet werden und es wird ein nahezu durchgängiger Zwischenraum 51, 52 im Inneren des Rotors 8 von der Oberseite des Trägers 4 bis zur Endplatte 10 des Rotors 8 geschaffen, in dem die heiße Luft von den Trägeröffnungen 4a nahezu ungehindert und gradlinig senkrecht bis zur Endplatte 10 aufsteigen kann.

In der ersten und zweiten Ausführungsform ist es dabei vorteilhaft, mehrere Heizlüfterrohre 3a, Trägeröffnungen 4a und Nabenöffnungen 7a gleichmäßig am Umfang des Trägers 4 bzw. in der Nabe 7 vorzusehen, um möglichst viel heiße Luft nach oben auszublasen und diese auch möglichst gleichmäßig in dem Zwischenraum 51, 52 vom Träger 4 bis zur Endplatte 10 hin zu verteilen, um auch eine gleichmäßige Erwärmung der Außenwand des Rotors 8 zu erreichen.

Auch können die Trägeröffnungen 4a und bzw. oder Nabenöffnungen 7a so ausgestaltet sein, dass sie den Luftstrom der aufsteigenden heißen Luft gezielt lenken und im Innenraum des Rotors 8 verteilen. So können die Trägeröffnungen 4a und bzw. oder Nabenöffnungen 7a möglichst weit außen in radialer Richtung von der Mittelachse, d.h. Drehachse, des Magnus-Rotors 2 vorgesehen sein, um die heiße Luft ab dem Austritt aus den Heizlüfterrohren 3a möglichst nah an der Außenwand des Rotors 8 vorbei aufsteigen zu lassen und hierdurch eine möglichst vollständige Wärmeabgabe von der aufsteigenden heißen Luft an die Außenwand des Rotors 8 zu erreichen. Auch können die Trägeröffnungen 4a und bzw. oder Nabenöffnungen 7a als Schlitze oder dergleichen ausgebildet sein, um den Luftstrom der heißen Luft möglichst flächig an der Außenwand des Rotors 8 vorbeizuführen und hierdurch die Erwärmung der Außenwand des Rotors 8 zu optimieren. Hierdurch kann die Abtauung des Blitzeises möglichst schnell und vollständig erreicht werden.

**Fig. 7** zeigt eine schematische Darstellung einer Draufsicht auf den Träger 4 eines Magnus-Rotors 2 in der ersten Ausführungsform. In dieser Darstellung sind die Trägeröffnungen 4a schlitzförmig ausgebildet und möglichst weit außen in radialer Richtung, d.h. möglichst nah an der Außenwand des Rotors 8, auf dem oberen Bereich des Trägers 4 angeordnet. Hierdurch tritt die heiße Luft möglichst parallel zur Innenseite der Außenwand des Rotors 8 aus den Trägeröffnungen 4a aus.

Um die Erwärmung der Außenwand des Rotors 8 zu unterstützen, kann der Rotor 8 aus Aluminium ausgebildet sein, da Aluminium Wärme besser aufnimmt und leitet als z.B. Stahl. Da die Außenwand des Rotors 8 lediglich die eigene Gewichtskraft tragen und die von außen angreifenden Windkräfte aufnehmen muss, ist eine solche Konstruktion bei einem Magnus-Rotor 2 möglich, ohne dass die erforderliche Stabilität der Konstruktion des Rotors 8 beeinträchtigt wird. Dabei können die Nabe 7 sowie die stehenden, d.h. im Betrieb des Magnus-Rotors 2 nicht rotierenden Teile, aus Stahl ausgebildet sein, um eine hohe Steifigkeit der Konstruktion zu erreichen, da diese Teile keine Wärme aus der heißen Luft aufnehmen brauchen und dies auch nicht sollen, um die Wärme der heißen Luft möglichst vollständig an die Außenwand des Rotors 8 abzugeben.

Vorteilhaft ist es dabei, den Heizlüfter 3 mit der elektrischen Energie zu speisen, die im Betrieb des Magnus-Rotors 2 dem Antrieb 15 zugeführt wird, da der Magnus-Rotor 2 solange nicht betrieben, d.h. durch den Antrieb 15 angetrieben, werden kann, wie der Rotor 8 vereist ist. Hierdurch sind keine weiteren elektrischen Installationen zusätzlich zu der Zuführung der elektrischen Energie zum Antrieb 15 nötig, wodurch Installationsaufwand bei der Einrichtung des Heizlüfters 3 gespart werden kann. Auch sind die elektrischen Installationen lediglich auf die Leistungsaufnahme eines der Geräte, d.h. entweder Antrieb 15 oder Heizlüfter 3, auszulegen und nicht auf eine gleichzeitige Leistungsaufnahme beider Geräte, da diese Geräte nicht gleichzeitig betrieben werden.

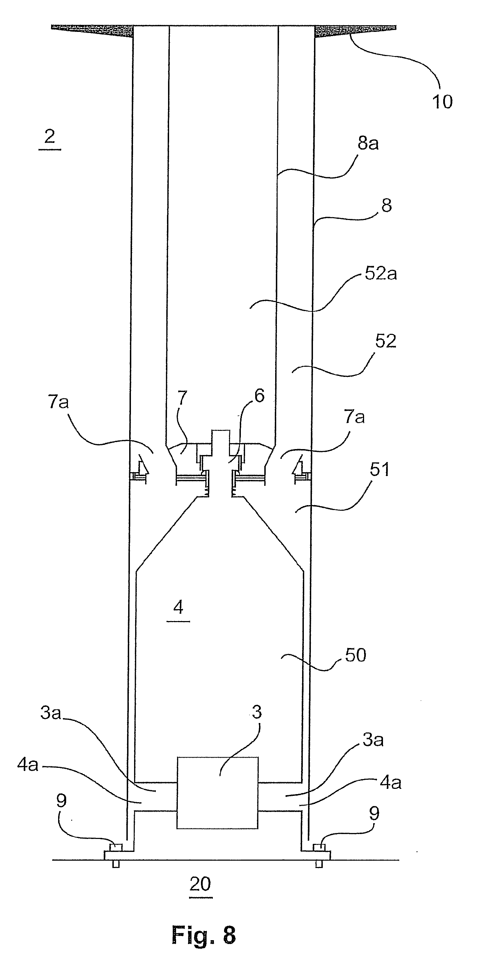

**Fig. 8** zeigt eine schematische Darstellung einer vereinfachten Seitenansicht des Magnus-Rotors 2 mit einer Heizvorrichtung 3 in der zweiten Ausführungsform. In dieser Darstellung ist im Inneren des Rotors 8 ein weiterer vorzugsweise zylindrischer Körper als Innenzylinder 8a vorgesehen. Dieser schließt mit seiner unteren vorzugsweise im Wesentlichen kreisförmigen Kante so an die Nabe 7 an, dass die Nabenöffnungen 7a zwischen dem Rotor 8 und dem Innenzylinder 8a angeordnet sind. Hierdurch wird der Zwischenraum 52 zwischen Nabe 7 und Endplatte 10 in einen Zwischenraum 52a innerhalb des Innenzylinders 8a und einen Zwischenraum 52 zwischen Innenzylinder 8a und Rotor 8 unterteilt.

In dieser Ausführungsform wird die aus den Nabenöffnungen 7a austretende heiße Luft an der Innenfläche des Rotors 8 entlang geführt und gibt ihre Wärme dort möglichst schnell und vollständig an diese ab, um den Rotor 8 zu erwärmen und abzutauen. Gleichzeitig kann die heiße Luft nicht frei im Inneren des oberen Teils des Rotors 8, d.h. im Zwischenraum 52, zirkulieren, da das Innere des Innenzylinders 8a, d.h. der Zwischenraum 52a, von dem Zwischenraum 52 zwischen Innenzylinder 8a und Rotor 8 durch den Innenzylinder 8a getrennt ist. Hierdurch kann die Wärme der heißen Luft besser zur Erwärmung und Abtauung des Rotors 8 genutzt werden, da keine heiße Luft in dem Volumen des Zwischenraums 52a gespeichert und damit nicht zur Erwärmung und Abtauung des Rotors 8 genutzt wird.

Um festzustellen, dass sich möglicherweise Eis an der Außenwand des Rotors 8 gebildet hat, können zum einen Wetterdaten herangezogen werden. Dabei können derartige Wetterdaten über eine Datenübertragung empfangen werden. Ferner können auch meteorologische Daten in der Umgebung des Magnus-Rotors 2, z.B. auf dem Schiff, welches mittels des Magnus-Rotors 2 angetrieben werden kann, ermittelt werden. Zu diesen können Windrichtung und Windstärke, die Lufttemperatur, die relative Luftfeuchtigkeit, der Luftdruck und seine Veränderung oder dergleichen ebenso zählen wie die Drehgeschwindigkeit des Rotors 8 und die Temperatur der Oberfläche des Rotors 8. Aus diesen und anderen Daten kann dann geschlossen werden, ob klimatisch eine Eisbildung an der Außenwand des Rotors 8 überhaupt möglich oder wahrscheinlich ist.

Ferner kann eine Erfassung einer möglichen Unwucht des Rotors 8 erfolgen. Hierzu können in wenigstens zwei axial versetzten Ebenen senkrecht zur Drehachse des Rotors 8 Unwuchten erfasst werden. Vorzugsweise werden die Unwuchten über Dehnungsmessstreifen, die beispielsweise in jeder Ebene angebracht werden, erfasst. Vorteilhaft hierbei ist, dass bereits vorhandene Dehnungsmessstreifen, die dauerhaft am Rotor 8 angebracht sind um z.B. die Vorschubkraft zu messen, verwendet werden können.

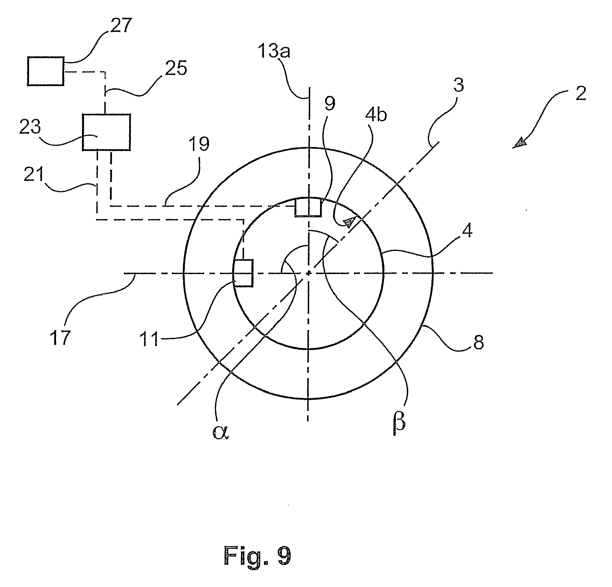

**Fig. 9** zeigt eine schematische Querschnittsansicht durch einen Magnus-Rotor 2. Der Magnus-Rotor 2 weist innerhalb des Rotors 8 den Träger 4 auf. An der Innenfläche 4b des Trägers 4 sind als Teil einer Messeinrichtung ein erster Dehnungssensor 9 und ein zweiter Dehnungssensor 11 angeordnet. Die Messeinrichtung ist dazu ausgebildet, eine Biegebeanspruchung der Rotor-Aufnahme infolge einer im Wesentlichen radialen Kraftbeanspruchung der Lagerung 6 durch Krafteinwirkung auf den Rotor 8 zu bestimmen. Die Messeinrichtung weist die zwei Dehnungssensoren 9, 11 auf, welche im vorliegenden Beispiel in einem Winkel von 90° zueinander angeordnet sind. Der erste Dehnungssensor 9 liegt vom Mittelpunkt des Trägers 4 aus betrachtet auf einer ersten Achse 13. Die erste Achse 13a verläuft in einem Winkel β zur Längsachse des Schiffs. In einer besonders bevorzugten Ausführungsform ist der Winkel β = 0°. Der zweite Dehnungssensor 11 ist vom Mittelpunkt des Trägers 4 aus betrachtet entlang einer zweiten Achse 17 an der Innenfläche 4b des Trägers 4 angeordnet. In einer besonders bevorzugten Ausführungsform ist der Winkel zwischen der ersten Achse 13 und der zweiten Achse 17 α = 90°.

Der erste Dehnungssensor 9 ist mittels einer Signalleitung 19 mit einer Datenverarbeitungsanlage 23 verbunden. Der zweite Dehnungssensor 11 ist mittels einer zweiten Signalleitung 21 mit der Datenverarbeitungsanlage 23 verbunden. Die Datenverarbeitungsanlage 23 ist mittels einer dritten Signalleitung 25 mit einer Anzeigeeinrichtung 27 verbunden. Die Anzeigeeinrichtung 27 ist dazu ausgebildet, Richtung und Betrag der auf den Träger 4 wirkenden Vorschubkraft anzuzeigen.

Die Dehnungssensoren 9, 11 der Messeinrichtung sowie diese selbst können zusätzlich oder alternativ zu der beschriebenen Funktion der Bestimmung der auf den Träger 4 wirkenden Vorschubkraft auch zur Erfassung von Unwuchten am Rotor 8 verwendet werden, um zusätzlich oder alternativ zu der Bestimmung von anhaftendem Eis mittels meteorologischen Daten dieses festzustellen, den Betrieb des betroffenen Magnus-Rotors 2 einzustellen und diesen erfindungsgemäß abzutauen.

Der Gedanke der Erfindung betrifft einen Magnus-Rotor, der auch beim Auftreten von Blitzeis, z.B. in klimatischen Regionen wie Kanada, betrieben werden kann. Derartiges Blitzeis kann bei Temperaturen unterhalb des Gefrierpunktes sehr plötzlich auftreten, dadurch dass Regen oder Schnee an dem Magnus-Rotor anhaften, falls dieser unter den Gefrierpunkt abgekühlt ist. Dieses Blitzeis setzt sich dabei bevorzugt im oberen Bereich des Magnus-Rotors an und kann eine große Masse mit entsprechend großem Gewicht annehmen. Durch dieses Zusatzgewicht kann es dazu kommen, dass der Magnus-Rotor nicht mehr betrieben werden kann.

Hierzu verfügt der erfindungsgemäße Magnus-Rotor über eine Abtaufunktion. Dabei wird mittels einer Heizung im Inneren des Trägers des Magnus-Rotors heiße Luft erzeugt und von innen durch Öffnungen im Träger an die Außenwand des Rotors des Magnus-Rotors geleitet, an dem sich das Blitzeis gebildet hat. Durch diese heiße Luft wird der Rotor erwärmt und das Blitzeis abgeschmolzen. Dabei leitet der aus Aluminium bestehende Rotor die Wärme der heißen Luft besonders gut nach außen, so dass sich das Abtauen auf diese Weise besonders gut umsetzen lässt. Ferner kann zur Erhitzung der Luft durch das Heizgerät die elektrische Energie des Antriebs des Magnus-Rotors verwendet werden, da der vereiste Magnus-Rotor nicht betrieben werden kann und damit beide Geräte, d.h. das Heizgerät und der Antrieb des Magnus-Rotors nicht gleichzeitig betrieben werden.

## Patentansprüche

1. Magnus-Rotor (2), mit
einem Träger (4),
einem Rotor (8), welcher im Betrieb des Magnus-Rotors (2) um den Träger (4) rotiert,
einer Lagerung (6), welche den Rotor (8) auf dem Träger (4) trägt,
**gekennzeichnet durch**
eine Heizvorrichtung (3), die in einem Innenraum (50) des Trägers (4) vorgesehen ist, zur Erzeugung von erhitzter Luft,
wobei der Träger (4) wenigstens eine Öffnung (4a) an seiner Außenseite aufweist, die den Innenraum (50) des Trägers (4) mit einem Zwischenraum (51) zwischen Träger (4) und Rotor (8) verbindet, wobei die **durch** die Heizvorrichtung (3) erhitzte Luft zwischen dem Innenraum (50) und dem Zwischenraum (51) hindurchtreten kann.

2. Magnus-Rotor (2) nach Anspruch 1,
wobei die Heizvorrichtung (3) über wenigstens eine Luftführung (3a) derart mit den Trägeröffnungen (4a) verbunden ist, dass die durch die Heizvorrichtung (3) erhitze Luft in den Zwischenraum (51) zwischen Träger (4) und Rotor (8) abgegeben werden kann.

3. Magnus-Rotor (2) nach Anspruch 1 oder 2,
wobei der Rotor (8) über ein Verbindungselement (7) auf der Lagerung (6) getragen wird, und
wobei das Verbindungselement (7) wenigstens eine Öffnung (7a) aufweist, die den Zwischenraum (51) zwischen Träger (4) und Rotor (8) mit dem Raum (52) oberhalb des Verbindungselements (7) verbindet, wobei Luft zwischen diesen beiden Räumen hindurchtreten kann.

4. Magnus-Rotor (2) nach einem der vorherigen Ansprüche,
wobei die Heizvorrichtung (3) eine Vielzahl von Luftführungen (3a) und/oder der Träger (4) eine Vielzahl von Öffnungen (4a) und/oder das Verbindungselement (7) eine Vielzahl von Öffnungen (7a) aufweisen.

5. Magnus-Rotor (2) nach Anspruch 4,
wobei das Verbindungselement (7) derart ausgebildet ist, dass die Öffnungen (7a) des Verbindungselements (7) in der horizontalen Ebene mehr Fläche einnehmen als das Verbindungselement (7) selbst.

6. Magnus-Rotor (2) nach Anspruch 4 oder 5,
wobei die Vielzahl von Luftführungen (3a) der Heizvorrichtung (3) und/oder die Vielzahl von Öffnungen (4a) des Trägers (4) und/oder die Vielzahl von Öffnungen (7a) des Verbindungselements (7) im Wesentlichen gleichmäßig über den Umfang des Trägers (4) und/oder des Verbindungselements (7) verteilt vorgesehen sind.

7. Magnus-Rotor (2) nach einem der Ansprüche 4 bis 6,
wobei die Vielzahl von Luftführungen (3a) der Heizvorrichtung (3) und/oder die Vielzahl von Öffnungen (4a) des Trägers (4) und/oder die Vielzahl von Öffnungen (7a) des Verbindungselements (7) auf dem Umfang des Trägers (4) und/oder des Verbindungselements (7) in radialer Richtung möglichst weit von der Mittelachse des Magnus-Rotors (2) beabstandet vorgesehen sind.

8. Magnus-Rotor (2) nach einem der vorherigen Ansprüche,
wobei der Rotor (8) aus Aluminium ausgebildet ist.

9. Magnus-Rotor (2) nach einem der vorherigen Ansprüche,
wobei der Träger (4) aus Stahl ausgebildet ist.

10. Magnus-Rotor (2) nach einem der vorherigen Ansprüche,
ferner mit einem Elektromotor (15), der im Inneren des Trägers (4) vorgesehen ist,
wobei die Heizvorrichtung (3) über elektrische Leitungen mit der elektrischen Energie gespeist wird, über die im Betrieb des Magnus-Rotors (2) der Elektromotor (15) gespeist wird.

11. Schiff, insbesondere Frachtschiff, mit einem Magnus-Rotor (2) nach einem der vorherigen Ansprüche.

## Claims

1. Magnus rotor (2) having
a carrier (4),
a rotor (8) which rotates about the carrier (4) during operation of the Magnus rotor (2),
a bearing (6) which carries the rotor (8) on the carrier (4),
**characterised by**
a heating device (3) which is provided in an inner space (50) of the carrier (4) in order to produce heated air,
the carrier (4) having on the outer side thereof at least one opening (4a) which connects the inner space (50) of the carrier (4) to an intermediate space (51) between the carrier (4) and rotor (8), the air heated by the heating device (3) being able to be introduced between the inner space (50) and the intermediate space (51).

2. Magnus rotor (2) according to claim 1,
wherein the heating device (3) is connected to the carrier openings (4a) by means of at least one air guide (3a) in such a manner that the air heated by the heating device (3) can be discharged in the intermediate space (51) between the carrier (4) and rotor (8).

3. Magnus rotor (2) according to claim 1 or claim 2,
wherein the rotor (8) is carried on the bearing (6) by means of a connection element (7), and
wherein the connection element (7) has at least one opening (7a) which connects the intermediate space (51) between the carrier (4) and rotor (8) to the space (52) above the connection element (7), air being able to be introduced between these two spaces.

4. Magnus rotor (2) according to any one of the preceding claims,
wherein the heating device (3) has a large number of air guides (3a) and/or the carrier (4) has a large number of openings (4a) and/or the connection element (7) has a large number of openings (7a).

5. Magnus rotor (2) according to claim 4,
wherein the connection element (7) is constructed in such a manner that the openings (7a) of the connection element (7) take up more surface-area in the horizontal plane than the connection element (7) itself.

6. Magnus rotor (2) according to claim 4 or claim 5,
wherein the large number of air guides (3a) of the heating device (3) and/or the large number of openings (4a) of the carrier (4) and/or the large number of openings (7a) of the connection element (7) are provided so as to be distributed in a substantially uniform manner over the periphery of the carrier (4) and/or the connection element (7).

7. Magnus rotor (2) according to any one of claims 4 to 6,
wherein the large number of air guides (3a) of the heating device (3) and/or the large number of openings (4a) of the carrier (4) and/or the large number of openings (7a) of the connection element (7) are provided on the periphery of the carrier (4) and/or the connection element (7) so as to be spaced apart from the centre axis of the Magnus rotor (2) to the greatest possible extent in a radial direction.

8. Magnus rotor (2) according to any one of the preceding claims,
wherein the rotor (8) is constructed from aluminium.

9. Magnus rotor (2) according to any one of the preceding claims,
wherein the carrier (4) is constructed from steel.

10. Magnus rotor (2) according to any one of the preceding claims,
further having an electric motor (15) which is provided inside the carrier (4),
wherein the heating device (3) is supplied with the electrical energy by means of electrical lines via which the electric motor (15) is supplied with electrical power during operation of the Magnus rotor (2).

11. Ship, in particular a freight ship, having a Magnus rotor (2) according to any one of the preceding claims.

## Revendications

1. Rotor à effet Magnus (2), comprenant un support (4),
un rotor (8) qui tourne autour du support (4) quand le rotor à effet Magnus (2) fonctionne,
un palier (6) qui supporte le rotor (8) sur le support (4),
**caractérisé par**
un dispositif de chauffage (3) qui est prévu dans un espace intérieur (50) du support (4) pour générer de l'air chauffé,
le support (4) présentant au moins une ouverture (4a) sur son côté extérieur, laquelle relie l'espace intérieur (50) du support (4) à un espace intermédiaire (51) entre le support (4) et le rotor (8), l'air chauffé par le dispositif de chauffage (3) pouvant passer entre l'espace intérieur (50) et l'espace intermédiaire (51).

2. Rotor à effet Magnus (2) selon la revendication 1,
dans lequel le dispositif de chauffage (3) est relié par l'intermédiaire d'au moins une conduite d'air (3a) aux ouvertures (4a) de support de telle manière que l'air chauffé par le dispositif de chauffage (3) puisse être distribué dans l'espace intermédiaire (51) entre le support (4) et le rotor (8).

3. Rotor à effet Magnus (2) selon la revendication 1 ou 2,
dans lequel le rotor (8) est supporté sur le palier (6) par l'intermédiaire d'un élément de liaison (7), et
dans lequel l'élément de liaison (7) présente au moins une ouverture (7a) qui relie l'espace intermédiaire (51) entre le support (4) et le rotor (8) à l'espace (52) au-dessus de l'élément de liaison (7), l'air pouvant passer entre ces deux espaces.

4. Rotor à effet Magnus (2) selon l'une quelconque des revendications précédentes,
dans lequel le dispositif de chauffage (3) présente une pluralité de conduites d'air (3a) et / ou le support présente une pluralité d'ouvertures (4a) et / ou l'élément de liaison (7) présente une pluralité d'ouvertures (7a).

5. Rotor à effet Magnus (2) selon la revendication 4,
dans lequel l'élément de liaison (7) est conçu de telle manière que les ouvertures (7a) de l'élément de liaison (7) occupent plus de surface dans le plan horizontal que l'élément de liaison (7) proprement dit.

6. Rotor à effet Magnus (2) selon la revendication 4 ou 5,
dans lequel la pluralité de conduites d'air (3a) du dispositif de chauffage (3) et / ou la pluralité d'ouvertures (4a) du support (4) et / ou la pluralité d'ouvertures (7a) de l'élément de liaison (7) sont prévues uniformément distribuées sur le pourtour du support (4) et / ou de l'élément de liaison (7).

7. Rotor à effet Magnus (2) selon l'une quelconque des revendications 4 à 6,
dans lequel la pluralité de conduites d'air (3a) du dispositif de chauffage (3) et / ou la pluralité d'ouvertures (4a) du support (4) et / ou la pluralité d'ouvertures (7a) de l'élément de liaison (7) sont prévues sur le pourtour du support (4) et / ou de l'élément de liaison espacés dans la direction radiale aussi loin que possible de l'axe central du rotor à effet Magnus (2).

8. Rotor à effet Magnus (2) selon l'une quelconque des revendications précédentes,
dans lequel le rotor (8) est en aluminium.

9. Rotor à effet Magnus (2) selon l'une quelconque des revendications précédentes,
dans lequel le support (4) est en acier.

10. Rotor à effet Magnus (2) selon l'une quelconque des revendications précédentes,
comprenant en outre un moteur électrique (15) qui est prévu à l'intérieur du support (4),
dans lequel le dispositif de chauffage (3) est alimenté en énergie électrique par l'intermédiaire de lignes électriques par lesquelles le moteur électrique (15) est alimenté lorsque le rotor à effet Magnus (2) fonctionne.

11. Navire, en particulier navire marchand, doté d'un rotor à effet Magnus (2) selon l'une quelconque des revendications précédentes.
